# EUROPÄISCHE PATENTANMELDUNG

(11) **EP 0 949 310 A1**
(43) Veröffentlichungstag der Anmeldung: **13.10.1999**
(21) Anmeldenummer: 98810295.0
(22) Anmeldetag: 07.04.1998
(51) Int. Cl.: C09J 5/06, C09J 175/04, C08G 18/70

(54) **Lagerstabiler, latent reaktiver Schmelzklebstoff und ein Verfahren zum Verkleben eines modularen Bauteils**

(71) Anmelder: EFTEC AG, 8590 Romanshorn (CH)
(72) Erfinder: Symietz, Detlef, Dr., 78464 Konstanz (DE); Walterspiel, Bernardo H., Dr., 8280 Kreuzlingen (CH); Rempfler, Urs, 9050 Appenzell (CH)
(74) Vertreter: Hepp, Dieter

(57) **Zusammenfassung**

Die vorliegende Erfindung betrifft einen bei Normalklimabedingungen mindestens 120 Stunden, bevorzugt 168 Stunden lagerstabilen, latent-reaktiven Schmelzklebstoff, welcher mindestens ein oberflächendesaktiviertes Polyisocyanat, mindestens ein hydrophobes isocyanatreaktives Polymer und mindestens einen hydrophoben Zuschlagstoff enthält. Weiterhin betrifft die vorliegende Erfindung mit diesem Schmelzklebstoff damit hergestellte Schichten, die trotz dieser Lagerbedingungen im wesentlichen blasenfrei ausgehärtete Schmelzklebstoffgrenzschichten und somit kohäsive Bruchbilder bei Zugscherprüfung ergeben. Der Schmelzklebstoff hat mindestens die Hydrophobizität der Einzelsubstanzen und erreicht damit eine Wasseraufnahme, die maximal bei 0.3 Gew.% liegt. Teil der vorliegenden Erfindung ist weiterhin ein mit diesem Schmelzklebstoff hergestelltesmodulares mindestens 120 Stunden bei Normalklima lagerstabiles, latent-reaktives Bauteil und ein Verfahren zum Verkleben eines modularen Bauteils mit einem weiteren Substrat.

## Beschreibung

Die vorliegende Erfindung bezieht sich auf lagerstabile, latent-reaktive Schmelzklebstoffe und auf damit hergestellte lagerstabile, latent-reaktive Schmelzklebstoffschichten, auf ein Verfahren zum Verkleben von modularen Bauteilen mit mindestens einem weiteren Substrat und auf ein verklebtes modulares Bauteil gemäss der Oberbegriffe der unabhängigen Ansprüche.

WO 94/18255 beschreibt einen latent-reaktiven, hitzehärtbaren Schmelzklebstoff, der ein oder mehrere Polyurethanvorprodukte enthält, welche ihrerseits aus Polyolen und/oder Polyaminen und aus verkapselten Polyisocyanten bestehen, wobei mindestens eines der zum Aufbau der Polyurethane dienenden Polyole ein festes Polyol ist, vorzugsweise ein kristallisierendes Polyesterpolyol, welches im Klebstoff einen Schmelzpunkt von 35 - 80°C aufweist.

Dieser Polyurethanschmelzklebstoff wird verwendet zur Herstellung latent-reaktiver, lagerstabiler modularer Bauteile, die insbesondere bei der Direktverglasung von Fahrzeugen Einsatz finden sollen.

Unter dem Begriff Schmelzklebstoff wird im allgemeinen ein bei Raumtemperatur fester Klebstoff verstanden, der auf das zu verklebende Teil bzw. die zu verklebenden Teile im plastischen Zustand durch Erwärmen über seine Erweichungstemperatur aufgetragen wird und nach dem Zusammenfügen mit einem weiteren Substrat beim Abkühlen unter Verfestigung physikalisch abbindet. Nachteil der rein physikalisch abbindenden Schmelzklebstoffe ist die Temperaturabhängigkeit ihrer klebetechnischen Eigenschaften. Bei erhöhter Temperatur gehen diese erneut in den plastischen Zustand über, wodurch ihre Klebeeigenschaft nahezu aufgehoben wird. Aufgrund dieses Nachteils sind in den letzten Jahren vor allem reaktive Polyurethanschmelzklebstoffe entwickelt worden. Bei diesen Schmelzklebstoffsystemen wird eine chemische Vernetzung nach Überschreiten einer bestimmten Reaktionstemperatur herbeigeführt.

Bekannte Polyurethanschmelzklebstoffe bzw. die damit hergestellten modularen Bauteile weisen jedoch durch Aufnahme von Wasser aus der Umgebungsluft ungenügende Lagerstabilitäten auf. Durch die beträchtliche Wasseraufnahme der mit diesen Schmelzklebstoffen hergestellten Schmelzklebstoffschichten kann es bereits nach eintägigen Lagerzeiten zu Blasenbildungen während der Aushärtung und dadurch bedingten ungenügenden Verklebungen oder während der Lagerung zu vorzeitiger Aushärtung kommen.

Diese Blasenbildung kann auf CO₂ zurückgeführt werden, welches nach Aufhebung der Oberflächendesaktivierung des Polyisocyanates durch Überschreiten der erforderlichen Reaktionstemperatur auf der Reaktion der freien Isocyanatgruppen mit dem aufgenommenen Wasser beruht. Eine weitere Ursache für Blasenbildung, die ebenfalls in der beträchtlichen Wasseraufnahme gängiger Schmelzklebstoffe begründet liegt, ist die Bildung von Wasserdampfbläschen. Schon wenige Blasen an der Grenzschicht Substrat/Klebstoff führen zu einem dramatischen Abfall der Festigkeit der Verklebung, die sich experimentell im Abfall der Zugscherfestigkeit äussert.

Aufgabe der vorliegenden Erfindung war es aus diesem Grund, einen Schmelzklebstoff zu entwickeln, dessen Wasseraufnahme möglichst gering ist. Ziel war es weiterhin, lagerfähige, latent-reaktive, hitzehärtbare modulare Bauteile unter Einbeziehung eines Schmelzklebstoffes so herzustellen, dass eine Aushärtung selbst nach längerer Lagerung von Tagen oder Wochen bei Normalklimabedingungen eine im wesentlichen blasenfrei ausgehärtete Grenzschicht Substrat/Klebstoffschicht ergibt. Weiterhin sollte der Schmelzklebstoff bzw. die damit hergestellten modularen Bauteile berührungsfest sein, damit die applizierte Klebstoffraupe beim Transport nicht deformiert oder beschädigt werden kann.

Die Aufgabe wird erfindungsgemäss gelöst durch die kennzeichnenden Merkmale der unabhängigen Ansprüche.

In erster Linie wird dies erfindungsgemäss erreicht durch einen lagerstabilen, latent-reaktiven Schmelzklebstoff, welcher mindestens ein festes, oberflächendesaktiviertes Polyisocyanat, mindestens ein mit Isocyanatgruppen reaktives Polymer und mindestens einen Zuschlagstoff enthält, wobei die Hydrophobie des Klebstoffes durch die qualitative und quantitative Kombination aus Polymer und Zuschlagstoff derart eingestellt wird, dass die Aushärtung einer auf ein Substrat aufgebrachten im wesentlichen unvernetzten Schmelzklebstoffschicht bei Reaktionstemperatur des Schmelzklebstoffes nach einer mindestens 120-stündigen und bevorzugt 168-stündigen Lagerung bei erstmaliger Exposition bei Normalklima eine im wesentlichen blasenfreie, ausgehärtete Schmelzklebstoffgrenzschicht ergibt.

Als Normalklimate werden nach DIN 50 014 (Dezember 1975) Konstantklimate mit festgelegten Werten für Temperatur und Feuchte der Luft verstanden. Normalklimate können in Klimaschränken, -kammern oder -räumen eingestellt werden. In der vorliegenden Erfindung wird unter dem Begriff Normalklima eine Lufttemperatur von 23°C und eine relative Luftfeuchtigkeit von 50% verstanden. Der Wasserdampfgehalt der Luft beträgt bei diesem Normalklima 10 g/m³.

Mit dem Ausdruck "erstmaliger Exposition" ist gemeint, dass der Kontakt der Schmelzklebstoffe mit Feuchtigkeit, wie sie insbesondere als Luftfeuchtigkeit bei Normalklimabedingungen auftritt, aber auch mit davon abweichenden Luftfeuchtigkeiten oder generell mit anderen Feuchtigkeitsquellen vor der Applikation absolut zu vermeiden ist, wenn die mindestens 120-stündigen Lagerzeiten und darüber der erfindungsgemässen Schmelzklebstoffe erreicht werden sollen. Dies umfasst auch ein generelles Vermeiden von Feuchtigkeit während der Produktion, Abfüllung und Lagerung der Schmelzklebstoffe. Die eingesetzten Rohstoffe sind vor Herstellung der Schmelzklebstoffe gegebenenfalls zu trocknen. Kommt es vor Applikation zu Kontakt mit Feuchtigkeit, so verkürzen sich die Lagerzeiten der erfindungsgemässen Schmelzklebstoffe dementsprechend.

Der hydrophobe Charakter einer Substanz wird durch ihre Tendenz bestimmt, möglichst geringe Mengen Wasser aufzunehmen. Je hydrophober eine Substanz oder eine Mischung ist, desto stärker ist ihr wasserabweisender Charakter bzw. ihre Tendenz, Wasser nicht aufzunehmen. Definitionsgemäss soll in der vorliegenden Erfindung die Wasseraufnahme der hydrophoben Einzelsubstanzen bzw. des Schmelzklebstoffes 0.3 Gew.% bezogen auf das jeweilige Gesamtgewicht nicht überschreiten.

Die Reaktionstemperatur bezeichnet die Temperatur, bei der die Reaktion zwischen Isocyanatgruppen und isocyanatreaktiven Gruppen, z.B. Hydroxyl- und/oder Aminogruppen, stattfindet. Die Reaktionstemperatur wird mittels Differential Scanning Calorimetry (DSC) bestimmt. Dabei sollte eine eindeutige exotherme Wärmetönung der zu messenden Substanz in einem Temperaturbereich von maximal 20°C erfolgen.

Definitionsgemäss soll der Begriff latent-reaktiv den Zustand des Schmelzklebstoffes bzw. der aufgebrachten Schmelzklebstoffschicht bezeichnen, in dem die Isocyanatgruppen des oberflächendesaktivierten Polyisocyanates, abgesehen von denen die schon bei der Desaktivierungsreaktion mit dem Desaktivierungsmittel reagiert haben, im wesentlichen noch nicht reagiert und/oder vernetzt vorliegen. Die Obergrenze der abreagierten, d.h. vernetzten, Isocyanatgruppen soll dabei (abzüglich der durch Desaktivierung verbrauchten) bei maximal 10 % liegen. In diesem so definierten unreagierten Zustand bleiben die funktionellen Gruppen so lange potentiell bzw. latent-reaktiv, bis die erforderliche Reaktionstemperatur überschritten wird. Das bedeutet, dass der Schmelzklebstoff sich somit auch lagerstabil verhält.

Die Festigkeit einer Klebverbindung hängt in erster Linie ab von
- der Festigkeit innerhalb der Klebschicht, allgemein als Kohäsionsfestigkeit bezeichnet, und
- der Haftwirkung zwischen Klebschicht und Substratoberfläche, allgemein als Adhäsionsfestigkeit bezeichnet.

Somit hängt die Festigkeit einer Klebverbindung von drei Faktoren ab, von der Adhäsion zwischen Klebschicht und der jeweiligen Substratoberfläche (wenn die Substrate verschieden) und von der Kohäsion innerhalb der Klebschicht. Die Gesamtfestigkeit der Klebverbindung ist nicht grösser als die des schwächsten Gliedes. In I.R.J. Schliekelmann, "Metallkleben - Konstruktion und Fertigung in der Praxis", aus Fachbuchreihe "Schweisstechnik", Deutscher Verlag für Schweisstechnik (DVS) GmbH, Düsseldorf, 1972, Band 60, Seite 4 ff., werden die Einflüsse der die Adhäsions- und Kohäsionskräfte bestimmenden physikalischen Parameter wie Oberflächenspannung, Randwinkel, Van-der-Waals-Kräfte, usw. beschrieben. Zusätzlich sollen zwischen Substrat und Klebstoff chemische Bindungen aufgebaut werden. Dies wird generell erreicht durch die Behandlung der Substratoberfläche vor Schmelzklebstoffapplikation mit Haftreinigern und Primern. Haftreiniger haben eine Doppelfunktion, sie befreien die Substratoberfläche von Fett und Schmutz. Zusätzlich bauen z.B. reaktive Silane chemische Bindungen zwischen Substratoberfläche und dem Primer auf. Der Primerfilm sorgt mit seinen reaktiven Komponenten für zusätzliche chemische Bindungen zwischen Substratoberfläche und Schmelzklebstoffschicht und damit für weitergehende Haftvermittlung zwischen diesen chemisch unterschiedlich aufgebauten Stoffen.

Bei Zugscherbelastung sind generell Kohäsivbrüche gewünscht. Der Bruch innerhalb der Klebschicht, d.h. ein Kohäsivbruch, zeigt eine sehr beständige Verbindung der kritischen Grenzschicht Substrat/Klebstoffschicht an.

Treten Blasen an der Grenzschicht Substrat/Klebstoffschicht auf, so führt dies in den allermeisten Fällen zu einem adhäsiven Bruchbild, d.h. zu einer ungenügenden Haftung Substratoberfläche/Klebstoffschicht. Definitionsgemäss wird im Hinblick auf die vorliegende Erfindung unter dem Ausdruck "im wesentlichen blasenfrei ausgehärtete Grenzklebstoffschicht" eine Klebstoffverbindung verstanden, die bei einer Zugscherprüfung zu einem kohäsiven Bruchbild führt. Dabei verläuft die Bruchlinie innerhalb der Schmelzklebstoffschicht. An einem Prüfkörper mit gut haftender, vorzugsweise geprimerter Oberfläche lässt sich das Bruchbild unschwer mit blossem Auge beurteilen. Ausserdem lässt sich die Blasenfreiheit im Bereich der Bruchstelle oder eines Schnittes ebenfalls mit blossem Auge feststellen.

Definitionsgemäss werden die ersten 10% der Schmelzklebstoffschicht der Grenzschicht des Schmelzklebstoffes zugerechnet.

Sowohl die Lagerstabilität als auch die latente vorhandene Reaktivität über mindestens 120 Stunden und bevorzugt 168 Stunden wird bei Normalklimabedingungen mit hydrophoben Schmelzklebstoffmischungen erreicht, die mindestens ein festes oberflächendesaktiviertes Polyisocyanat, mindestens einen Zuschlagstoff und mindestens ein isocyanatreaktives Polymer, aus der Gruppe der isocyanatreaktiven, insbesondere hydroxylfunktionellen, gesättigten, teil- oder ungesättigten Kohlenwasserstoffe. Die erwähnte Lagerstabilität wird natürlich nur dann erreicht, wenn der Schmelzklebstoff, wie bereits erläutert, erstmalig Normalklimabedingungen (23°C/50% relativer Luftfeuchtigkeit) ausgesetzt wird.

Als isocyanatreaktive, gesättigte, teil- oder ungesättigte Kohlenwasserstoffe können weiterhin auch aminfunktionelle Kohlenwasserstoffe eingesetzt werden.

Im Sinne der vorliegenden Erfindung werden unter dem Begriff teilgesättigt alle isocyanatreaktiven linearen und verzweigten Kohlenwasserstoffe verstanden, deren Kohlenstoffbindungen ausgehend vom gesättigten Zustand bis 60%, bevorzugt bis 20% und noch bevorzugter bis 10% als Doppel- und/oder Dreifachkohlenstoffbindungen vorliegen. Entsprechend wird unter gesättigtem Zustand des Kohlenwasserstoffes, ein Kohlenwasserstoff verstanden, in dem alle Kohlenstoffbindungen Einfachbindungen sind. Definitionsgemäss fallen unter die Bezeichnung ungesättigte Kohlenwasserstoffe, alle diejenigen Kohlenwasserstoffe, deren Anteil an Doppel- und/oder Dreifachkohlenstoffbindungen ausgehend vom gesättigten Zustand mindestens 60% beträgt.

Lagerstabile latent-reaktive Schmelzklebstoffe werden erfindungsgemäss bevorzugt dann erhalten, wenn die Summe aus oberflächendesaktiviertem Polyisocyanat und dem mit Isocyanatgruppen reaktivem Polymer unter 60 Gew.% der Gesamtmischung, bevorzugt bis 50% beträgt. Zuschlagstoffe sollten also auch so gewählt werden, dass die Hydrophobie der Gesamtmischung nicht reduziert wird. Eine Einstellung der Hydrophobie im Sinne der Erfindung schliesst also vor allem ein, dass die Komponenten, die als Zuschlagstoffe eingesetzt werden, je für sich hydrophob sind und die Hydrophobizität der Gesamtmischung vorzugsweise erhöhen.

Weiterhin wirken sich isocyanatreaktive Polymere mit Molekulargewichten unter 25'000 g/mol, bevorzugt unter 15'000 g/mol und noch bevorzugter unter 8000 g/mol vorteilhaft auf das Erzielen einer im wesentlichen blasenfrei ausgehärteten Grenzklebstoffschicht aus. Generell wird der Schmelzklebstoff umso weicher, je höher das Molekulargewicht der isocyanatreaktiven Polymerkomponente ist.

Teilkristallinität des isocyanatreaktiven, insbesondere hydroxylfunktionellen Kohlenwasserstoffes führt, je nach Formulierung, zur Berührungsfestigkeit des unvernetzten Schmelzklebstoffsystems bis zu Temperaturen von ca. 60°C. Damit wird ebenfalls eine Transportstabilität der auf ein Bauteil aufgetragenen Schicht gewährleistet.

Unter dem Begriff berührungsfest und transportstabil soll deshalb verstanden werden, dass eine unvernetzte Klebstoffraupe bei Lagerung und bei Transporterschütterungen, sowie beim gelegentlichen Berühren mit der Hand beim Handhaben nicht deformiert oder zerstört wird.

Einsetzbar aus der Gruppe der hydroxylfunktionellen teil- oder ungesättigten Kohlenwasserstoffe sind in erster Linie Polybutadiene und Polyisoprene, die beispielsweise unter der Handelsbezeichnung Poly IP, Epol, Kuraray TH-1, Kuraray TH-21, Kuraray TH-31, Kuraray LIR-503, Kuraray LIR-506, Liquiflex H, Polytail H Europrene LB-OH, Poly bd R 20LM, Poly bd R 45HT, Krasol LBH, Melthene H-Typen, Nisso PB G-Typen, Nisso PB G HF-Typen, Nisso PB GI-Typen, Nisso PBSG-2050, Nisso MSG-500, Hycar-Typen und Kraton-Typen vertrieben werden. Dabei liegt die OH-Funktionalität der Polymere zwischen 1,5 und 6, bevorzugt zwischen 1.5 und 4 und noch bevorzugter zwischen 2 und 3.

Als Polyisocyanate sind für das erfindungsgemässe Verfahren alle festen, pulverförmigen oberflächlich desaktivierten Di- oder Polyisocyanate oder deren Gemische geeignet. Ein Verfahren zur Herstellung stabiler Dispersionen feinteiliger, oberflächendesaktivierter Polyisocyanate wird in DE 31 12 054 beschrieben. Es können aliphatische, cycloaliphatische, heterocyklische oder aromatische Polyisocyanate eingesetzt werden. Als Beispiele seien genannt: dimeres 2,4-Diisocyanatotoluol, dimeres 4,4'-Diisocyanatodiphenylmethan, 3,3'-Diisocyanato-4,4'-dimethyl-N,N'-diphenylharnstoff, trimeres Isophorondiisocyanat, 1,4 Phenylendiisocyanat, Naphthalin-1,5-diisocyanat, sowie deren Additionsprodukte mit kurzkettigen Diolen wie beispielsweise 1,4-Butandiol oder 1,2-Ethandiol.

Unter dem allgemeinen Begriff Zuschlagstoffe werden im Zusammenhang mit der vorliegenden Erfindung auf der einen Seite Füllstoffe wie z.B. Kreide, Russ, Kaolin, Kieselsäure, Schwerspat, Talkum verstanden. Unter den Begriff fallen aber auch bunte und unbunte Pigmente wie z.B. Titandioxid.

Die verwendeten Füllstoffe werden in den überwiegenden Fällen chemisch unmodifiziert eingesetzt, können aber auch chemisch modifiziert bzw. nachbehandelt sein.

Weiterhin werden als Zuschlagstoffe auch Extender wie hochmolekulare gesättigte Kohlenwasserstoffe ohne funktionelle Gruppen mit Molekulargewichten unter 50000 g/mol bezeichnet, die aus Kostenüberlegungen in das System eingeführt werden können. Neben den reinen Kostenüberlegungen können diese hochmolekularen Extender darüberhinaus als verfestigende Komponente im Schmelzklebstoff Wirkung entfalten. Das bedeutet, dass die Eigenschaften der im wesentlichen unvernetzten Schmelzklebstoffe, wie die Festigkeit bei Raumtemperatur, das Erweichen bei Temperaturen bis 70°C nicht nur von der isocyanatreaktiven Polymerkomponente bewirkt wird, sondern auch von den hochmolekularen Extendern herbeigeführt werden kann.

Neben der Einstellung der Fliesseigenschaften oder Standfestigkeit des Klebstoffsystems, wirken bestimmte Füllstoffe wie Graphit, Metallpulver, Eisenoxide, wie z.B. gamma-Eisenoxide, Magnetite und Ferrite sich besonders vorteilhaft auf die Wärmeleitfähigkeit und auf die Induktionsaushärtung des Klebstoffsystems aus, was dem Erreichen rascher Aushärtungen hinsichtlich der kurzen Taktzeiten am Fliessband sehr entgegenkommt.

Bevorzugt ist weiterhin der Einsatz von Zuschlagstoffen aus der Gruppe der hydrophoben Weichmacher in einer Menge von 5 bis 40 Gew.% des Gesamtgewichts des Schmelzklebstoffes. Diese können in flüssiger Form oder in festem, jedoch aufschmelzbarem Zustand vorliegen. Besonders vorteilhaft im Sinne der vorliegenden Erfindung werden gesättigte und teilgesättigte Kohlenwasserstoffe mit oder ohne aromatische Anteile mit einem Molekulargewicht von unter 1000 g/mol wie z.B. paraffinische, naphthenische Weichmacher, Mineralöle, Mikrowachse wie Ceresin und Ozokerit eingesetzt. Auch diese Zuschlagsstoffe können die Eigenschaften des Schmelzklebstoffes, wie schon bei den hochmolekularen Extendern beschrieben, unterstützen bzw. herbeiführen.

Wenn erforderlich, werden in speziellen Anwendungsfällen weitere Flüssigkomponenten, wie aliphatische Kohlenwasserstoffe und/oder andere Lösemittel zur Regulierung der Rheologie dem Klebstoffsystem beigemischt.

Überraschenderweise hat sich gezeigt, dass - entgegen den ursprünglichen Erwartungen - der Zusatz eines Trocknungsmittels sich negativ auf die Hydrophobie des Systems bei Lagerzeiten ab 120 Stunden und noch negativer ab 168 Stunden auswirkt. Je nach Formulierung können aber Mengen bis ca. 3 Gew-% bezogen auf das Gesamtgewicht des Schmelzklebstoffes eingesetzt werden. Als Trocknungsmittel wird bevorzugt Calciumoxid verwendet.

Die erfindungsgemässen Schmelzklebstoffmischungen erweichen bei Temperaturen über 45°C, bevorzugt zwischen 50 und 70°C. Die chemische Reaktion zwischen den Isocyanatgruppen und den Hydroxyl- und/oder Amingruppen des isocyanatreaktiven Polymeren findet statt bei Reaktionstemperaturen zwischen 70°C und 200°C. Das System ist danach vernetzt und somit unschmelzbar. Die Reaktionstemperatur und der Reaktionsverlauf werden bestimmt durch die Art des Polyisocyanates, durch Art und Menge des Oberflächenstabilisators, durch den Löslichkeitsparameter des funktionellen Polymeren sowie durch Katalysatoren, Weichmacher und andere Hilfsmittel.

Die Steuerung der Vernetzungsreaktion zwischen den isocyanatreaktiven Gruppen der Polymeren und den Isocyanatgruppen geschieht durch Zugabe von Katalysatoren. Beispiele für Urethan-Katalysatoren sind organische Zinn-, Eisen-, Blei-, Kobalt-, Wismut-, Antimon-, Zink und Aminverbindungen.

Die erfindungsgemässe Klebstoffmischung, darf nicht mehr als 0,3 Gew.% Wasser bezogen auf das Gesamtgewicht der Mischung während einer mindestens 120-stündigen und bevorzugt 168-stündigen Lagerung bei Normalklima aufnehmen. Eine höhere Wasseraufnahme würde bei der Aushärtung des Schmelzklebstoffes zur Blasenbildung in der ausgehärteten Schmelzklebstoffgrenzschicht führen. Voraussetzung ist auch hier, dass es sich um eine erstmalige Exposition handelt, d.h. dass das Schmelzklebstoffsystem vorher nicht Feuchtigkeit ausgesetzt war. Der Wassergehalt lässt sich zum einen coulometrisch z.B. mit einer Wassergehaltsbestimmung nach Karl-Fischer oder aber auch durch einfache Gravimetrie bestimmmen. Letztere Bestimmungsmethode kommt bei der fertigen, jedoch im wesentlichen unvernetzten Schmelzklebstoffmischung zur Anwendung, da eine coulometrische Wassergehaltsbestimmung für diese schwer durchführbar ist. Bei den Rohstoffen wurde eine zufriedenstellende Übereinstimmung zwischen der absoluten coulometrischen Wassergehaltsbestimmung und der relativen gravimetrischen gefunden, so dass der gravimetrisch ermittelte Wert von 0.3 Gew-% für den Schmelzklebstoff absolut zu verstehen ist.

Die Wasseraufnahme der Rohstoffe, die genau wie die des Schmelzklebstoffes auch unter 0.3 Gew-% bezogen auf das Gesamtgewicht liegen muss, ist das ausschlagebende Kriterium für die Bestimmung der erforderlichen Hydrophobie der isocyanatreaktiven Polymere, Weichmacher und Extender für ihre Verwendung im erfindungsgemässen Schmelzklebstoff. Der Wert des Wassergehalts der Rohstoffe wird coulometrisch bestimmt.

Die Wasseraufnahme wird durch Wägen des auf ein Substrat aufgetragenen Schmelzklebstoffes vor und nach mindestens 120-stündiger und noch bevorzugter 168-stündiger Exposition bei Normalklima errechnet. Der Schmelzklebstoff wird mit einer Einwaage von 10g in einer Dicke von 4.7 mm so in ein Gefäss gebracht, dass das Verhältnis von Oberfläche zu Volumen ca. 0.2 beträgt und der Durchmesser des Gefässes der Oberfläche des Klebstoffes entspricht.

Die erfindungsgemässe Schmelzklebstoffmischung wird zur Herstellung modularer latent-reaktiver lagerstabiler Bauteile benutzt.

Vorgefertigte modulare Bauteile geniessen mit zunehmender Automatisierung von Fliessband-Montagen wachsende Beliebtheit. Durch den Zulieferer bereits montagefertig vorbereitete Bauteile führen in der Verwaltung, bei der Logistik und bei den Kosten für die Abfallbeseitigung für den Hersteller nur zu Vorteilen. Die verstärkte Verwendung modularer Bauteile für die Fliessbandmontage wird insbesondere von der Automobilindustrie verfolgt.

Der erfindungsgemässe Schmelzklebstoff kann auch zum Herstellen modularer Glasbauteile zur Direktverglasung im Automobilbau dienen.

Teil der vorliegenden Erfindung ist weiterhin ein Verfahren zum Verkleben eines modularen Bauteiles mit einem weiteren Substrat, wobei das Verfahren durch das Aufeinanderfolgen mehrerer Prozessschritte gekennzeichnet ist:
A) Auftrag einer Klebstoffraupe entlang dem Rand eines Bauteils aus einem latent-reaktiven, lagerstabilen hydrophoben Schmelzklebstoff bei einer Temperatur oberhalb der Erweichungstemperatur des Schmelzklebstoffs, enthaltend in einer Menge bis 60 Gew.% der Gesamtmischung mindestens ein festes oberflächendesaktiviertes Polyisocyanat und mindestens ein mit Isocyanaten reaktives hydrophobes Polymer, wobei die Schmelzklebstoffraupe nach einer mindestens 120-stündigen und bevorzugt 168-stündigen Lagerung bei Normalklima nach Aushärtung noch im wesentlichen blasenfreie kohäsive Bruchbilder ergibt.
B) Aushärtung und Vernetzung der Klebstoffraupe entlang der Grenzschicht zum Bauteil in einer Dicke von mindestens 5% der Gesamtdicke der Klebstoffraupe durch Erhitzen auf Temperaturen oberhalb der Reaktionstemperatur des Schmelzklebstoffes;
C) Gegebenenfalls Lagerung und Transport des Moduls zum Verarbeiter innerhalb einer vorbestimmbaren Zeit.
D) Zusammenfügung des noch nicht ausgehärteten Teils der Klebstoffraupe bei Temperaturen oberhalb der Erweichungstemperatur des Schmelzklebstoffes mit dem Substrat und Zusammenpressen auf eine einstellbare Fügedistanz;
E) Aufheizen des derart zusammengepressten Moduls auf Reaktionstemperatur des Polyisocyanates und blasenfreie Verklebung des Bauteils mit dem Substrat in der Schmelzklebstoffgrenzschicht

Fakultativ können D) und E) auch in einem gemeinsamen Schritt durchgeführt werden.

Das Erhitzen auf Vernetzungstemperatur kann mit jeder Wärmequelle erfolgen. Kurze Taktzeiten werden jedoch am besten mittels induktiver Erwärmung erreicht, sofern eines der Bauteilelemente ferromagnetisch ist und/oder dem Schmelzklebstoff ein ferromagnetisches Material zugesetzt ist.

Erfindungsgemäss wird weiterhin ein mit dem Schmelzklebstoff hergestelltes mit einem weiteren Substrat verklebtes modulares Bauteil beschrieben, dessen Klebstoffgrenzschichten im wesentlichen blasenfrei ausgehärtet vorliegen und damit bei Zugscherprüfung zu kohäsiven Bruchbildern führt.

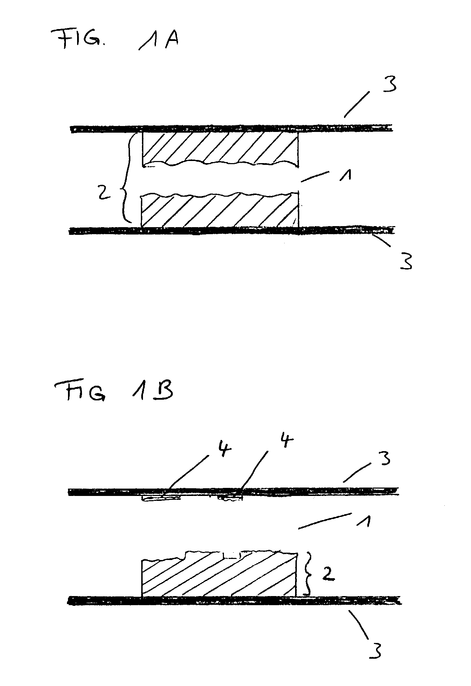

In Figur 1 sind verschiedene Bruchbilder im schematischem Querschnitt gezeigt.
Figur 1A zeigt einen Kohäsivbruch im schematischen Querschnitt.
Figur 1B zeigt den gleichen Querschnitt als Adhäsivbruch.

Bei einem kohäsiven Bruchbild verläuft die Bruchlinie 1 innerhalb der Schmelzklebstoffschicht 2 während bei einem adhäsiven Bruchbild die Bruchlinie im Prinzip an der Grenzschicht Substrat 3 und Schmelzklebstoffschicht 2 verläuft. Vereinzelte Reste 4 der Schmelzklebstoffschicht 2 können nach dem Bruch auf dem Substrat 3 haften bleiben.

Weiterhin sind alle Kombinationen und Mischformen dieser beiden Bruchbilder möglich, wie z.B. ein Kohäsivbruch mit adhäsiver Materialablösung oder ein teilweises Ablösen des Haftgrundes bei Zugscherbelastung.

Die Erfindung wird durch nachfolgende Beispiele weiter illustriert, ist jedoch nicht auf diese beschränkt:

### Prüfungen

a) Zugscherfestigkeit: Auf ein geprimertes, 6 mm dickes Glasstück von 25 x 100 mm wird nach ca. 10 Minuten Ablüften des Primers eine Dreiecksraupe des aufgeschmolzenen Klebers (70 - 80°C) aufgetragen und das Ganze mit einem 25 mm breiten KTL-Blech sowie 3 mm dicken Teflon Abstandhaltern ca. 5 Minuten bei ca. 70°C thermostatisiert. Anschliessend werden die Substrate auf eine Überlappungslänge von ca. 12 mm gefügt und dann in einem Umluftofen bei 120°C während 20 Minuten ausgehärtet. Anschliessend wird die Zugscherfestigkeit bestimmt.
b) Berührungsfestigkeit: Eine Dreieckraupe des auf 70 bis 85 °C aufgeschmolzenen Schmelzklebstoffes wird auf ein Stück geprimertes Glas aufgetragen und dann auf Raumtemperatur abgekühlt. Nach ca. 5 Minuten kann die nun feste Raupe berührt werden ohne diese zu deformieren. Zur weiteren Prüfung wird die Probe nach ca. 1 Stunde in einen 50°C warmen Umluftofen gelegt und nach verschiedenen Zeitintervallen auf Berührungsfestigkeit überprüft.
c) Lagerstabilität bei Normalklimabedingungen: Geprimerte, 6mm dicke Glasprobekörper von 25 x 100mm werden bei RT ca. 10 Minuten abgelüftet und anschliessend bei 70 - 80°C 5 Minuten thermostatisiert. Aus einer ebenfalls bei 70° bis 80°C thermostatisierten Kartusche mit Klebstoff werden Materialraupen auf die geprimerte Fläche aufgetragen und abkühlen gelassen. Durch kurzzeitiges Erwärmen über die Reaktionstemperatur auf der Glasseite wird eine ca. 1mm dicke Klebstoffschicht ausgehärtet. Danach werden die Proben im Normalklima eine vorbestimmte Zeit gelagert. Nach Fügen auf 3mm mit einem KTL-Blech bei ca. 70°C wird der Prüfkörper im Ofen bei 120°C während 20 Minuten ausgehärtet und anschliessend die Zugscherfestigkeit bestimmt.
d) Reaktionstemperatur
   Die Reaktionstemperatur wird mittels DSC verfolgt.

### Beispiel 1 (lagerstabil, berührungsfest)

### Vorprodukt "Togodur T9-Suspension A" (oberflächendesaktiviertes Polyisocyanat):

In 185g eines naphthenischen Weichmachers mit 34% Aromatenanteil (Gravex 970; Shell) werden 5.1g eines aliphatischen Diamins als Desaktivierungsmittel (Jeffamine D-400; Huntsman) vermischt und mittels Dissolver rasch 150g Togodur T9 (Polyisocyanat, EFTEC) eindispergiert. Bei dieser Dispergierung erfolgt die Desaktivierung an der Oberfläche des Polyisocyanats.

In einem bei 90°C vorgeheizten Planetenmischer werden 1500g eines hydroxy-funktionellen, hydrierten Polybutadiens (Polytail H; Atochem) aufgeschmolzen und anschliessend nacheinander 1400g eines getrockneten Kaolins und 320g eines ebenfalls getrockneten Russes (spez. Oberfläche 70 m²/g) zudosiert und homogenisiert. In einem weiteren Gefäss werden 332g eines naphthenischen Weichmachers mit 34% aromatischem Anteil (Gravex 970, Shell), 20 g Dibutylzinndilaurat sowie 19.7g eines aliphatischen Diamins als Desaktivierungsmittel (Jeffamine D-400; Huntsman) vorgemischt und der Schmelze in zwei Portionen zugegeben. Danach wird die Temperatur auf 80°C herabgesetzt. Zum Schluss werden 430.7g des oben aufgeführten Vorproduktes Togodur T9-Suspension A zudosiert und bei mässiger Rührgeschwindigkeit im Vacuum 15 Minuten homogenisiert und der fertige Klebstoff in Kartuschen abgefüllt.

Man erhält einen Schmelzklebstoff mit einem Schmelzbereich von ca. 60-70°C und einer Reaktionstemperatur von 110°C. Der Gewichtsanteil der vernetzbaren Polymeren beträgt 43% der Gesamtmischung.

Die Berührungsfestigkeit ist bis 50° C einwandfrei gegeben.

Die Lagerstabilität ergab folgendes Ergebnis:

| Lagerzeit | Zugscherfestigkeit [MPa] | Bruchbild |
|---|---|---|
| Anfangswert | 6.5 | blasenfrei, kohäsiv |
| 2 Wochen | 6.3 | blasenfrei, kohäsiv |
| 4 Wochen | 5.7 | blasenfrei, kohäsiv |
| 6 Wochen | 5.9 | blasenfrei, kohäsiv |
| 8 Wochen | 5.8 | blasenfrei, kohäsiv |
| 10 Wochen | 5.2 | blasenfrei, kohäsiv |
| 12 Wochen | 5.5 | blasenfrei, kohäsiv |

### Beispiel 2 (lagerstabil, berührungsfest)

In einem bei 90°C vorgeheizten Planetenmischer werden 500g eines hydroxy-funktionellen, hydrierten Polybutadiens (Polytail H, Atochem) aufgeschmolzen und anschliessend 110g eines naphthenischen Weichmachers mit 34% aromatischem Anteil (Gravex 970; Shell), 6.7g Dibutylzinndilaurat sowie 6.6g eines aliphatischen Diamins als Desaktivierungsmittel (Jeffamine D-400; Huntsman) zugegeben und kurz homogenisiert. Weiter werden 466.5g getrocknetes Kaolin sowie 130g einer hydrophobisierten pyrogenen Kieselsäure (Cabosil TS720, Cabot) zugegeben und ebenfalls homogenisiert. Danach wird die Temperatur auf 80° herabgesetzt und 143.6g der Togodur T9-Suspension A wie in Beispiel 1 angegeben, zudosiert und bei mässiger Rührgeschwindigkeit im Vacuum 15 Minuten homogenisiert. Der fertige Klebstoff wird zum Schluss in Kartuschen abgefüllt.

Man erhält einen Schmelzklebstoff mit einem Schmelzbereich von ca. 60-70°C und einer Reaktionstemperatur von 115°C. Der Polymergehalt der vernetzbaren Polymere beträgt 42%.

Die Berührungsfestigkeit ist bis 50°C einwandfrei gegeben.

Die Lagerstabilität ergab folgendes Ergebnis:

| Lagerzeit | Zugscherfestigkeit [MPa] | Bruchbild |
|---|---|---|
| Anfangswert | 6.0 | blasenfrei, kohäsiv |
| 2 Wochen | 5.2 | blasenfrei, kohäsiv |
| 4 Wochen | 4.6 | blasenfrei, kohäsiv |
| 6 Wochen | 4.5 | blasenfrei, kohäsiv |
| 8 Wochen | 4.5 | blasenfrei, kohäsiv |

### Beispiel 3 (lagerstabil, berührungsfest)

In einem bei 90°C vorgeheizten Planetenmischer werden 500g eines hydroxy-funktionellen, hydrierten Polybutadiens (Polytail H; Atochem) aufgeschmolzen und anschliessend nacheinander 465g eines getrockneten Kaolins und 106.5g eines ebenfalls getrockneten Russes (spez. Oberfläche 30 m²/g) zudosiert und homogenisiert. In einem weiteren Gefäss werden 110g eines naphthenischen Weichmachers mit 34% aromatischem Anteil (Gravex 970; Shell), 6.8g Dibutylzinndilaurat sowie 6.5g eines aliphatischen Diamins (Jeffamine D-400; Huntsman) vorgemischt und der Schmelze zugegeben und kurz homogenisiert. Danach wird die Temperatur auf 80° herabgesetzt und 143.5g der Togodur T9-Suspension A wie in Beispiel 1 angegeben, zudosiert und bei mässiger Rührgeschwindigkeit im Vacuum 15 Minuten homogenisiert. Der fertige Klebstoff wird zum Schluss in Kartuschen abgefüllt.

Man erhält einen im geschmolzenen Zustand niedrigviskosen und wenig standfesten Schmelzklebstoff mit einem Schmelzbereich von ca. 60-70°C und einer Reaktionstemperatur von 117°C. Der Gewichtsanteil der vernetzbaren Polymere beträgt 43% der Gesamtmischung.

Die Berührungsfestigkeit ist bis 50°C einwandfrei gegeben.

Die Lagerstabilität ergab folgendes Ergebnis:

| Lagerzeit | Zugscherfestigkeit [MPa] | Bruchbild |
|---|---|---|
| Anfangswert | 5.7 | blasenfrei, kohäsiv |
| 2 Wochen | 5.6 | blasenfrei, kohäsiv |
| 4 Wochen | 5.9 | blasenfrei, kohäsiv |
| 6 Wochen | 4.7 | blasenfrei, kohäsiv |
| 8 Wochen | 5.4 | blasenfrei, kohäsiv |

### Beispiel 4 (lagerstabil, berührungsfest)

In einem Planetenmischer werden 500g eines hydroxyfunktionellen Polybutadiens der OH-Zahl 46, (Poly bd R 45 HT, Atochem), 8g eines aliphatischen Diamins (Jeffamine D-400, Huntsman) sowie 7g Dibutylzinndilaurat kurz homogenisiert. Danach werden 600g eines getrockneten Kaolins und 140g eines getrockneten Russes (spez. Oberfläche 70m²/g) zugesetzt und ca. 15 Minuten intensiv homogenisiert. Die Temperatur des Planetenmischers wird nun auf 70° C erhöht und 175g eines Paraffins mit einem Schmelzpunkt von 60° C werden in zwei Teilen zugegeben und ca. 10 Minuten homogenisiert. Zum Schluss werden 144g Togodur T9-Suspension A (Herstellung wie in Beispiel 1 angegeben) zudosiert und ca. 15 Minuten im Vaccum homogenisiert. Dann wird der Klebstoff in Kartuschen abgefüllt.

Man erhält einen Schmelzklebstoff mit einem Schmelzpunkt von 60°C und einer Reaktionstemperatur von 100°C, der Gewichtsanteil der vernetzbaren Polymere beträgt 36.5% der Gesamtmischung.

Die Berührungsfestigkeit wurde gemäss Beschreibung "Prüfmethoden b)" geprüft, jedoch nach einer Wartezeit nach der Applikation von 6h, und ist bis 40°C gegeben.

Die Lagerstabilität ergab folgendes Ergebnis:

| Lagerzeit | Zugscherfestigkeit (MPa) | Bruchbild |
|---|---|---|
| Anfangswert | 3.8 | blasenfrei, kohäsiv |
| 2 Wochen | 3.6 | blasenfrei, kohäsiv |
| 4 Wochen | 3.6 | blasenfrei, kohäsiv |
| 6 Wochen | 3.7 | blasenfrei, kohäsiv |
| 8 Wochen | 3.5 | blasenfrei, kohäsiv |
| 10 Wochen | 3.5 | blasenfrei, kohäsiv |

### Beispiel 5 (lagerstabil, berührungsfest)

In einem bei 50°C thermostatisierten Planetenmischer werden 160g eines hydroxyfunktionellen Polyisoprens der OH-Zahl 13 (Kuraray LIR-506, Kuraray) 7.8g eines aliphatischen Diamins (Jeffamine D-400; Huntsman) und 6.6g Dibutylzinndilaurat kurz homogenisiert. Danach werden 450g eines getrockneten Kaolins und 105g eines getrockneten Russes (spez. Oberfläche 70m²/g) zugesetzt und ca. 15 Minuten intensiv homogenisiert. Die Temperatur des Planetenmischers wird nun auf 70°C gesteigert und 160g eines Paraffins mit einem Schmelzpunkt von 60°C in zwei Teilen zugegeben und ca. 10 Minuten homogenisiert. Zum Schluss werden 51g Togodur T9-Suspension A (Herstellung wie in Beispiel 1 angegeben) zudosiert und ca 15 Minuten im Vaccum homogenisiert. Dann wird der Klebstoff in Kartuschen abgefüllt.

Man erhält einen hochviskosen Klebstoff mit einer Reaktionstemperatur von 120°C, der Gewichtsanteil der vernetzbaren Polymere beträgt 42% der Gesamtmischung.

Die Berührungsfestigkeit wurde gemäss der Beschreibung "Prüfmethoden b) geprüft, jedoch nach einer Wartezeit nach der Applikation von 6h, und ist bis 40°C gegeben.

Die Lagerstabilität ergab folgendes Ergebnis:

| Lagerzeit | Zugscherfestigkeit (MPa) | Bruchbild |
|---|---|---|
| Anfangswert | 2.0 | blasenfrei, kohäsiv |
| 2 Wochen | 1.6 | blasenfrei, kohäsiv |
| 4 Wochen | 1.9 | blasenfrei, kohäsiv |
| 6 Wochen | 1.9 | blasenfrei, kohäsiv |
| 8 Wochen | 1.7 | blasenfrei, kohäsiv |
| 10 Wochen | 1.8 | blasenfrei, kohäsiv |

### Beispiel 6 (Gegenbeispiel; berührungsfest, jedoch nicht lagerstabil)

In einem bei 60°C vorgeheizten Planetenmischer werden 960g eines Polycaprolactondiols (CAPA 222; Solvay-Interox) aufgeschmolzen und anschliessend 15g eines aliphatischen Diamins (Jeffamine D-400, Huntsman) zugesetzt. Nach kurzer Mischzeit werden 50g eines Molekularsiebes mit 3 A Porengrösse (Sylosiv A3; Grace) zugegeben und eingearbeitet. Weiter werden 208.8g Togodur T9 (EFTEC) zudosiert und 10 Minuten homogenisiert. Anschliessend werden 15g Dibutylzinndilaurat zugesetzt und nach kurzem Vermischen 550g eines getrockneten Kaolins sowie 240g eines getrockneten Russes (spez. Oberfläche 70m²/g) mit mässiger Rührgeschwindigkeit eingearbeitet. Nach 15 Minuten mischen im Vakkum wird der Klebstoff in Kartuschen abgefüllt.

Man erhält einen Schmelzklebstoff mit einem Schmelzpunkt von ca. 50°C und einer Reaktionstemperatur von 100°C. Der Gewichtsanteil der vernetzbaren Polymere beträgt 58% der Gesamtmischung.

Die Berührungsfestigkeit ist bis 45° einwandfrei gegeben.

Die Lagerstabilität ergab folgendes Ergebnis:

| Lagerzeit | Zugscherfestigkeit [MPa] | Bruchbild |
|---|---|---|
| Anfangswert | 9.5 | blasenfrei, kohäsiv |
| 1 Woche | 2.2 | Blasen |
| 2 Wochen | 2.2 | Blasen |

### Beispiel 7 (Gegenbeispiel, nicht lagerstabil, nicht berührungsfest)

### Die Togodur T9-Suspension B wird vorher wie folgt hergestellt:

500g eines Polypropylenoxidtriols (Voranol CP 4755; Dow) werden mit 20g eines aliphatischen Diamins (Jeffamine D-400; Huntsman) kurz vermischt und 480g Togodur T9 rasch eindispergiert.

480g eines Polypropylenoxiddiols, (Voranol P2000; Dow), 720g eines Polypropylenoxidtriols (Voranol CP 4755; Dow), 24g eines aliphatischen Diamins (Jeffamine D-400;Huntsman), 16g eines Wismut-Katalysators sowie 760g eines Phthalat-Weichmachers (Diisononylphtalat) werden in einem Dissolver homogenisiert. Danach werden nacheinander 120g eines Molekularsiebes mit 3 A Porengrösse (Sylosiv A3, Grace), 200g eines getrockneten Russes (spez. Oberfläche 70m²/g) und 1400g einer gefällten und gecoateten Kreide zugesetzt und 15 Minuten homogenisiert. Zum Schluss werden 370g Togodur T9-Suspension B zudosiert und ca 15 Minuten im Vakkum homogenisiert. Dann wird der Klebstoff in Kartuschen abgefüllt.

Man erhält einen niedrigviskosen, standfesten Klebstoff mit einer Reaktionstemperatur von 80°C, der Gewichtsanteil der vernetzbaren Polymere beträgt 40% der Gesamtmischung.

Die Lagerstabilität ergab folgendes Ergebnis:

| Lagerzeit | Zugscherfestigkeit [MPa] | Bruchbild |
|---|---|---|
| Anfangswert | 3.5 | blasenfrei, kohäsiv |
| 1 Stunde | 1.4 | adhäsiv, wenig Blasen |
| 2 Stunden bildung | 0.6 | adhäsiv, starke Blasen |
| 4 Stunden | 0.5 | adhäsiv, starke Blasenbildung |
| 1 Tag | 0.1 | adhäsiv, starke Blasendung,durchgehend |

Beispiele 8 bis 11 und Diagramm zeigen die Gewichtszunahme durch Wasseraufnahme in Abhängigkeit von der Menge des zugesetzten Trocknungsmittels und der Expositionszeit bei ca. 10 g Einwaage Materialdicke von ca. 4.7 mm und Oberfläche/Volumen = ca. 0.2

| **Zusammensetzung/Beispiele** | **8** | **9** | **10** | **11** |
|---|---|---|---|---|
| a) Poly bd R 45 HT | 15.18 | 15.43 | 15.17 | 15.18 |
| b) Naftolen P611, Metallgesellschaft | 14.85 | 14.23 | 13.05 | 11.85 |
| c) Dibutylzinndilaurat | 0.53 | 0.55 | 0.54 | 0.53 |
| d) Russpaste (40% in DINP) | 0.02 | 0.02 | 0.02 | 0.02 |
| e) Jeffamine D-400 | 0.16 | 0.16 | 0.16 | 0.16 |
| f) Titandioxid | 1.1 | 1.12 | 1.1 | 1.1 |
| g) Winnofil SPT, ICI | 56.43 | 53.94 | 53.05 | 50.8 |
| h) Togodur T9 Suspension C | 11.73 | 11.91 | 11.72 | 11.72 |
| i) CaO-Suspension A (60% in Naftolen P611, gemahlen; ca. 5 mikrometer | | 2.64 | 5.19 | 8.64 |
| Polymergehalt der vernetzbaren Polymere % | 26.7 | 27.1 | 26.7 | 26.7 |
| Weichmachergehalt % | 14.8 | 15.3 | 15.1 | 15.3 |
| Füllstoffgehalt % | 59.9 | 55.4 | 54.5 | 52.3 |
| CaO- Gehalt % | 0.0 | 1.6 | 3.1 | 5.2 |
| Reaktionstemperatur °C | 105°C | 105°C | 105°C | 105°C |
| Zugscherfestigkeit MPa Bruchbild | 2.4 c.f.; blfr. | 2.5 c.f.; blfr. | 2.5 c.f.; blfr. | 2.4 c.f.; blfr. |
| c.f. = kohäsiv blfr. = blasenfrei | | | | |

### Herstellung der Beispiele 8 - 11:

### Die Togodur T9-Suspension C wird vorher separat wie folgt hergestellt:

540g Poly bd R 45 HT (Atochem) werden mit 18.7 Jeffamine D 400 (Huntsman) und 36g Winnofil SPT (ICI) mit einem Dissolver vermischt und anschliessend werden 540g Togodur T9 unter dissolvern rasch zudosiert.

Komponenten a) bis f) und i) werden in einem Dissolver vermischt und anschliessend erfolgt die Zugabe der Komponente g), die dann gut homogenisiert wird, wobei sich die Masse auf ca. 50°C erhitzt. Danach wird die Mischung über einen Dreiwalzenstuhl ohne Kühlung weiter homogenisiert und anschliessend in einen ungeheizten Planetenmischer überführt. Nach der Zugabe der Komponente h) wird ca. 10 Minuten im Vacuum bei niedriger Rührgeschwindigkeit homogenisiert und die Reaktionsmischung dann in Kartuschen abgefüllt.

Coulometrisch und gravimetrisch bestimmter %-Gehalt an H₂O Aufnahme der Rohstoffe:

| **Rohstoff** | **Coulometrische Bestimmung des H**_{**2**}**O- Gehalts vor Exposition (%)** | **Coulometrische Bestimmung 20d/NK (%)** | **Gravimetrische Bestimmung 20Tage/NK (%)** |
|---|---|---|---|
| a) **Weichmacher** | | | |
| Benzylbutylphthalat | 0.066 | 0.145 | 0.05 (1) |
| Diisononylphthalat | 0.022 | 0.063 | 0.045 |
| Gravex 970 | 0.007 | 0.01 | 0.000 (1) |

| b) **Polyole:** | | | |
|---|---|---|---|
| Voranol CP 4755 (Polyetherpolyol) | 0.042 | 0.9 | 1.0 |
| Poly bd R 45 HT hydroxylfunktionelles Polybutadien | 0.019 | 0.095 | 0.02 (1) |
| Poly IP hydroxylfunktionelles Polyisopren | 0.065 | 0.086 | 0.1 |
| Fomrez F1522 Polyesterpolyol | 0.011 | 1.40 | 1.250 |

| | | | |
|---|---|---|---|
| (1) Werte wurden durch flüchtige Anteile verfälscht | | | |

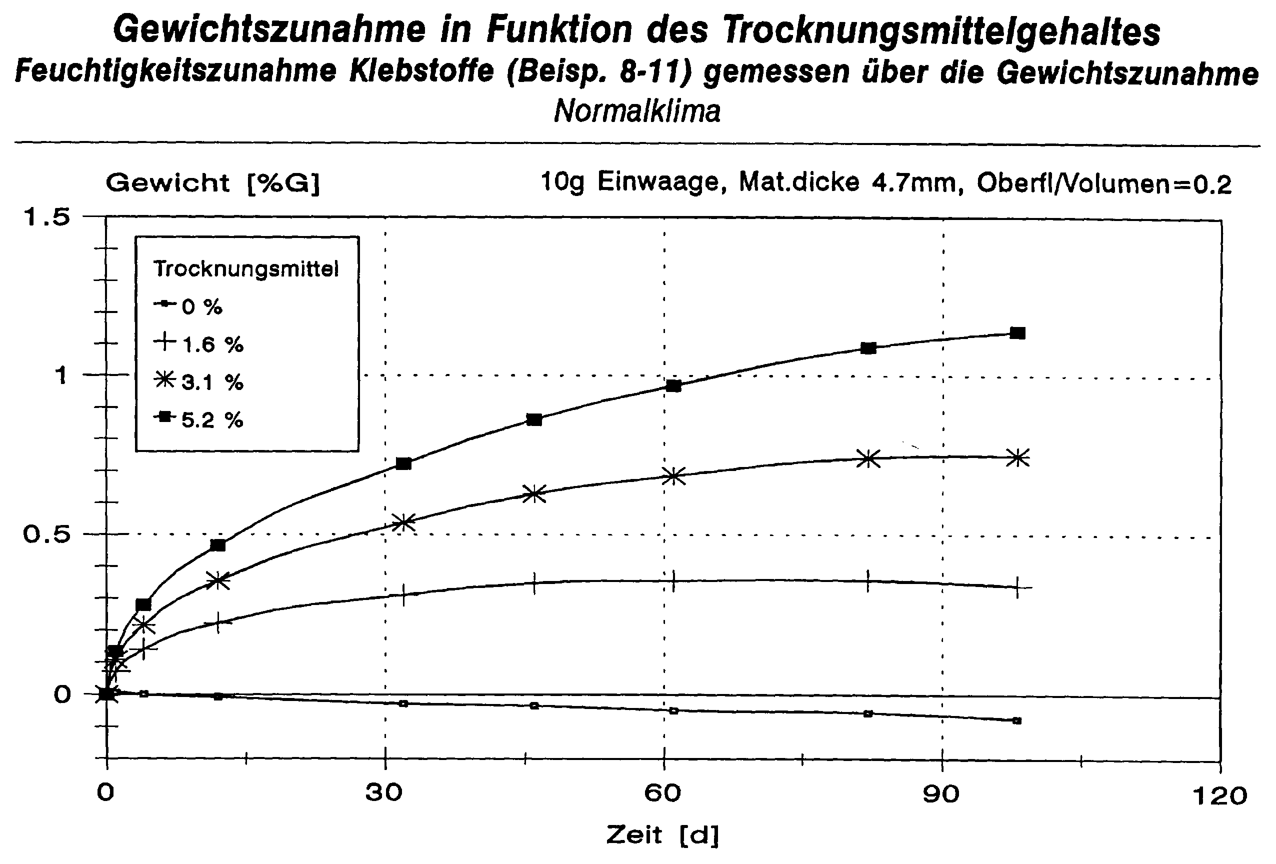

### Gravimetrische Bestimmung der Feuchtigkeitsaufnahme Normsalklima

| **(%) Gewichtszunahme nach x Tagen Lagerung** | | | | | | |
|---|---|---|---|---|---|---|
| | 3 | 6 | 10 | 13 | 17 | 20 |
| Beispiel | | | | | | |
| 1 | 0.059 | 0.075 | 0.090 | 0.099 | 0.107 | 0.111 |
| 2 | 0.032 | 0.050 | 0.065 | 0.073 | 0.076 | 0.082 |
| 3 | 0.028 | 0.043 | 0.057 | 0.065 | 0.071 | 0.077 |
| 4 | 0.05 | 0.072 | 0.093 | 0.104 | 0.115 | 0.121 |
| 5 | 0.04 | 0.056 | 0.077 | 0.086 | 0.092 | 0.121 |
| 6 | 0.582 | 0.746 | 0.924 | 1.050 | 1.160 | 1.210 |
| 7 | 0.910 | 1.040 | 1.100 | 1.110 | 1.080 | 1.120 |

## Patentansprüche

1. Lagerstabiler, latent-reaktiver Schmelzklebstoff, enthaltend mindestens ein festes oberflächendesaktiviertes Polyisocyanat, mindestens ein mit Isocyanatgruppen reaktives Polymer und mindestens einen Zuschlagstoff, dadurch gekennzeichnet, dass die Hydrophobie des Schmelzklebstoffes durch die qualitative und quantitative Kombination von isocyanatreaktivem Polymer und Zuschlagstoff derart eingestellt wird, dass die Aushärtung einer auf ein Substrat aufgebrachten im wesentlichen unvernetzten Schmelzklebstoffschicht bei Reaktionstemperatur des Schmelzklebstoffes nach einer mindestens 120-stündigen Lagerung bei erstmaliger Exposition bei Normalklima eine im wesentlichen blasenfrei ausgehärtete Klebstoffgrenzschicht ergibt.

2. Schmelzklebstoff, enthaltend mindestens ein festes oberflächendesaktiviertes Polyisocyanat, mindestens ein mit Isocyanatgruppen reaktives Polymer und mindestens einen Zuschlagstoff, dadurch gekennzeichnet, dass die Hydrophobie des Schmelzklebstoffes durch die qualitative und quantitative Kombination von isocyanatreaktivem Polymer und Zuschlagstoff derart eingestellt wird, dass die Aushärtung einer auf ein Substrat aufgebrachten im wesentlichen unvernetzten Schmelzklebstoffschicht bei Reaktionstemperatur des Schmelzklebstoffes nach einer mindestens 120-stündigen Lagerung bei erstmaliger Exposition bei Normalklima eine im wesentlichen blasenfrei ausgehärtete Klebstoffgrenzschicht ergibt, wobei das Polymer aus der Gruppe der isocyanatreaktiven linearen und/oder teilverzweigten ungesättigten, teilgesättigten und/oder gesättigten Kohlenwasserstoffe stammt.

3. Schmelzklebstoff nach einem der Ansprüche 1 und 2, dadurch gekennzeichnet, dass das isocyanatreaktive Polymer aus der Gruppe der hydroxylfunktionellen Kohlenwasserstoffe mit einer Hydroxylgruppenfunktionalität zwischen 1,5 und 6, bevorzugt zwischen 1.5 und 4 und noch bevorzugter zwischen 2 und 3 stammt.

4. Schmelzklebstoff nach Anspruch 3, dadurch gekennzeichnet, dass der hydroxylfunktionelle Kohlenwasserstoff Polybutadien oder Polyisopren ist.

5. Schmelzklebstoff nach einem der Ansprüche 1 bis 4, dadurch gekennzeichnet, dass die Summe aus oberflächendesaktiviertem Polyisocyanat und dem mit Isocyanatgruppen reaktivem Polymer unter 60 Gew.%, bevorzugt unter 50 Gew.% der Gesamtmischung beträgt.

6. Schmelzklebstoff nach einem der Ansprüche 1 bis 5, dadurch gekennzeichnet, dass das mit Isocyanatgruppen reaktive Polymer ein Molekulargewicht unter 25'000 g/mol bevorzugt unter 15'000 g/mol und noch bevorzugter unter 8000 g/mol aufweist.

7. Schmelzklebstoff nach einem der Ansprüche 1 bis 6, dadurch gekennzeichnet, dass als Zuschlagstoff ein Trocknungsmittel unter 3 Gew.% eingesetzt wird.

8. Schmelzklebstoff nach einem der Ansprüche 1 bis 7, dadurch gekennzeichnet, dass die Reaktionstemperaturen des Schmelzklebstoffes im Bereich zwischen 70°C und 200°C liegt und der Schmelzklebstoff bei Ueberschreiten besagter Reaktionstemperatur aushärtbar ist.

9. Schmelzklebstoff nach einem der vorangehenden Ansprüche, wobei als Zuschlagstoffe Weichmacher aus der Gruppe der gesättigten und teilgesättigten Kohlenwasserstoffe mit Molekulargewichten bis 1000 g/mol und/oder Extender aus der Gruppe der gesättigten und teilgesättigten Kohlenwasserstoffe mit Molekulargewichten bis 50000 g/mol einsetzbar sind.

10. Schmelzklebstoff nach einem der vorangehenden Ansprüche, dadurch gekennzeichnet, dass als Zuschlagstoffe hydrophobierte und/oder nicht hydrophobierte pulverförmige Füllstoffe und/oder Pigmente einsetzbar sind.

11. Schmelzklebstoff nach einem der Ansprüche 1 bis 10, dadurch gekennzeichnet, dass die Teilkristallinität des isocyanatreaktiven Polymeren dem Schmelzklebstoff im im wesentlichen unvernetzten Zustand bis 60°C Berührungsfestigkeit und Transportstabilität verleiht.

12. Lagerstabiler, latent-reaktiver Schmelzklebstoff, enthaltend mindestens ein festes oberflächendesaktiviertes Polyisocyanat, mindestens ein mit Isocyanatgruppen reaktives Polymer, mindestens einen Zuschlagstoff, dadurch gekennzeichnet, dass die Wasseraufnahme des Schmelzklebstoffes nach einer mindestens 120-stündigen Lagerung bei Normalklima maximal 0.3 Gew.% bezogen auf das Gesamtgewicht des Schmelzklebstoffes beträgt, wobei die Wasseraufnahme wie folgt gemessen wird: Eine Probe des Schmelzklebstoffes wird mit einer Einwaage von 10g in einer Dicke von 4.7mm so in ein Gefäss gebracht, dass das Oberflächen/Volumen-Verhältnis 0.2 beträgt und die Oberfläche des Schmelzklebstoffes der Oberfläche des Gefässes entspricht.

13. Schmelzklebstoff nach einem der Ansprüche 1 bis 12, dadurch gekennzeichnet, dass die Lagerzeit einer mit besagtem Schmelzklebstoff hergestellten Schmelzklebstoffschicht und/oder -Strang vor Aushärtung bei Normalklima mindestens 168 Stunden beträgt.

14. Verwendung des Schmelzklebstoffes gemäss einem der vorangehenden Ansprüche zur Herstellung modularer latent-reaktiver lagerstabiler Bauteile.

15. Verfahren zum Verkleben eines modularen Bauteils mit einem weiteren Substrat, gekennzeichnet durch
A) Auftrag einer Klebstoffraupe entlang dem Rand eines Bauteils aus einem latent-reaktiven, lagerstabilen hydrophoben Schmelzklebstoff bei einer Temperatur oberhalb der Erweichungstemperatur des Schmelzklebstoffs, enthaltend in einer Menge bis 60 Gew.% der Gesamtmischung mindestens ein festes oberflächendesaktiviertes Polyisocyanat und mindestens ein mit Isocyanaten reaktives hydrophobes Polymer, wobei die Schmelzklebstoffraupe nach einer mindestens 120-stündigen, bevorzugt 168-stündigen Lagerung bei Normalklima nach Aushärtung noch im wesentlichen blasenfreie kohäsive Bruchbilder ergibt;
B) Aushärtung und Vernetzung der Klebstoffraupe entlang der Grenzschicht zum Bauteil in einer Dicke von mindestens 5% der Gesamtdicke der Klebstoffraupe durch Erhitzen auf Temperaturen oberhalb der Reaktionstemperatur des Schmelzklebstoffes;
C) gegebenenfalls Lagerung und Transport des Moduls innerhalb einer vorbestimmbaren Zeit;
D) Zusammenfügung des noch nicht ausgehärteten Teils der Klebstoffraupe bei Temperaturen oberhalb der Erweichungstemperatur des Schmelzklebstoffes mit dem Substrat und Zusammenpressen auf eine einstellbare Fügedistanz;
E) Aufheizen des derart zusammengepressten Moduls auf Reaktionstemperatur des Polyisocyanates und blasenfreie Verklebung des Bauteils mit dem Substrat in der Schmelzklebstoffgrenzschicht.

16. Verklebtes modulares Bauteil mit einem Schmelzklebstoff gemäss einem der Ansprüche 1 bis 13 zusammengefügt mit wenigstens einem weiteren Substrat, dadurch gekennzeichnet, dass die beiden jeweiligen Grenzschichten zum Substrat bzw. zum Bauteil im wesentlichen blasenfrei ausgehärtet vorliegen.
